# EUROPÄISCHE PATENTSCHRIFT

(11) **EP 1 204 343 B1**
(45) Veröffentlichungstag und Bekanntmachung des Hinweises auf die Patenterteilung: **03.09.2003**
(21) Anmeldenummer: 00945891.0
(22) Anmeldetag: 07.07.2000
(51) Int. Cl.: A47C 31/02, B60N 2/58

(54) **VORRICHTUNG ZUM BEFESTIGEN EINES BEZUGES AN EINEM SCHAUMKÖRPERTEIL, INSBESONDERE EINEM POLSTERSCHAUMTEIL FÜR EINEN FLUG- ODER FAHRGASTSITZ**
DEVICE FOR FIXING A COVER TO A FOAMED BODY COMPONENT, ESPECIALLY AN UPHOLSTERY FOAMED BODY COMPONENT FOR AN AIRLINE OR VEHICLE PASSENGER SEAT
DISPOSITIF POUR FIXER UN REVETEMENT SUR UNE PARTIE DE CORPS EN MOUSSE, NOTAMMENT UNE PARTIE DE CORPS EN MOUSSE DE REMBOURRAGE POUR SIEGE D'AVION OU DE VEHICULE A PASSAGERS

(30) Priorität: 17.08.1999 DE 19938877
(43) Veröffentlichungstag der Anmeldung: 15.05.2002
(73) Patentinhaber: Gottlieb Binder GmbH & Co., 71088 Holzgerlingen (DE)
(72) Erfinder: POULAKIS, Konstantinos, D-71157 Hildrizhausen (DE)
(74) Vertreter: Bartels, Martin Erich Arthur
(86) Internationale Anmeldenummer: EP0006432
(87) Internationale Veröffentlichungsnummer: WO01012022

(56) Entgegenhaltungen:
- US-A- 4 776 636
- US-A- 5 101 539
- US-A- 5 236 243
- US-A- 5 826 939

## Beschreibung

Die Erfindung bezieht sich auf eine Befestigungsanordnung eines Bezuges an einem Schaumkörperteil, insbesondere einem Polsterschaumteil für einen Flug- oder Fahrgastsitz, mit einem am Grund einer nutartigen Vertiefung des Schaumkörperteiles befestigten Haftverschlußelement, bestehend aus einem Träger und darauf angeordneten Verhakungselementen, mit einem zur Verhakung mit diesem vorgesehenen Flauschelement, das mit Teilen des Bezuges in der Vertiefung anbringbar ist, und mit einem Formelement, das mit dem Flauschelement zur Vergrößerung von dessen das Haftverschlußelement berührender Aufstandsfläche zusammenwirkt, indem das Zusammenfahren der zu verhakenden Elemente in Richtung des Flächenlotes erfolgt, wobei das Formelement ein bei Druckbelastung nachgiebiges, bei Entlastung zumindest näherungsweise zur Ausgangsform zurückkehrendes Material aufweist.

Die Befestigung von Sitzbezügen an Schaumkörperteilen mit Hilfe von in Vertiefungen des Schaumkörperteiles verankerten Haftverschlußelementen gestaltet sich in mehrerer Hinsicht problematisch. Bei der geringen Breite, wie sie sich aus optischen und funktionalen Gründen für die nutartigen Vertiefungen im Schaumkörperteil ergibt, in denen der Sitzbezug aufzunehmen und zu verankern ist, steht lediglich eine verhältnismäßig schmale Berührungs- oder Aufstandsfläche für die Kontaktbildung zwischen Haftverschlußelement und zugewandter stimseitiger Endfläche der Faltung des Bezuges zur Verfügung. Um ausreichende Verankerungskräfte zu erreichen, ist man daher bestrebt, mit Hilfe geeigneter Formelemente eine möglichst flache, vollflächige Auflage des Flauschelementes am Haftverschlußelement zu erreichen, beispielsweise indem zwischen Sitzbezug und Flauschelement ein Formelement in Form eines Steges eingefügt wird, an dessen Ende das Flauschelement als flaches Flauschband angebracht ist, vergleiche WO 98/22307.

Zwar ist bei Inkaufnahme des für derartige Anordnungen zusätzlichen Aufwandes eine Flächenvergrößerung und damit erhöhte Haltekraft erreichbar, die Verbesserung der Kontaktbildung zwischen Flauschelement und Haftverschlußelement führt jedoch bei der Montage der Sitzbezüge zu größeren Schwierigkeiten, weil bereits beim ersten Anlegen des Bezuges an das Schaumkörperteil die Verhakung mit hoher Anfangsfestigkeit erfolgt. Dies hat zur Folge, daß gegebenenfalls beim ersten Anlegen des Bezuges vorhandene Ausrichtungs- oder Positionierungsfehler nicht mehr ohne weiteres korrigiert werden können, weil sich die anfängliche, verhältnismäßig großflächig erfolgte Verhakung nur noch schwer lösen läßt, wobei es meist zu einem Herausreißen der an der Verhakung beteiligten Elemente kommt.

Durch die US-A-5 236 243 ist eine gattungsgemäße Vorrichtung zum Befestigen eines Bezuges an einem Schaumkörperteil bekannt, bei der an der Unterseite des Polsterbezuges ein Polsterschaum vergleichbar dem Schaum für das Polsterschaumteil für den Flug- oder Fahrgastsitz angeordnet ist. Die eine Abnahtstelle bildenden Teile des Bezuges sind im Bereich der Nahtstelle flächig aneinandergelegt und deren Enden bilden eine Art Webkante oder Borte aus, die nicht miteinander verbunden sind. Die flächig aneinanderliegenden Bezugsteile sind derart von dem Bezugsschaum als Formelement umgeben, daß ein an dieser Stelle den Schaum des Bezuges umgebendes Flauschelement an seiner dem Haftverschlußelement in der Vertiefung zugewandten Seite eine ebene vergrößerte Aufstandsfläche ausbildet, ähnlich wie bei der Lösung nach der WO 98/22307. Werden nun die miteinander zu verhakenden Elemente zusammengefahren, erfolgt dies in der Richtung des Flächenlotes, so daß eine flache vollflächige Auflage des Flauschelementes am Haftverschlußelement mit seinen hakenförmigen Verhakungselementen erreicht ist. Trotz dieser vollflächigen Anlage über einen großen Flächen-Verhakungsbereich innerhalb der Vertiefung sind die derart zu erhaltenden Verschluß- oder Verhakungskräfte unzureichend. Letzteres ist für einen Durchschnittsfachmann auf dem Gebiet der Haftverschlußtechnologie zwar überraschend, aber in Verbindung damit zu sehen, daß durch die großflächige Anlage und das Verhaften der Verhakungselemente in Richtung des Flächenlotes ein Teil der Verhakungselemente flachgedrückt und mithin für einen Verhakungsvorgang nicht mehr zur Verfügung steht. Da beim Herstellen der Verbindung eine statische Anordnung zwischen den Haken des Haftverschlußelementes in der Vertiefung und dem Flauschelement am Bezug gegeben ist, können die nicht in Eingriff gebrachten Verhakungselemente auch nach Herstellen der Verbindung für einen Verhakungsvorgang nicht mehr zur Verfügung stehen. Auch bei dieser bekannten Lösung besteht das Problem, daß nach Herstellen der großflächigen Verhakung im ersten Moment der Verhakung sich Ausrichtungs- und Positionierfehler nur schwer korrigieren lassen.

Ausgehend von diesem Stand der Technik liegt der Erfindung die Aufgabe zugrunde, die bekannten Vorrichtungen dahingehend weiter zu verbessern, daß diese eine einfachere und sichere Befestigung von Sitzbezügen ermöglichen. Eine dahingehende Aufgabe löst eine Befestigungsanordnung mit den Merkmalen des Patentanspruches 1 in seiner Gesamtheit.

Dadurch, daß gemäß dem kennzeichnenden Teil des Patentanspruches 1 das Flauschelement an einer in der Vertiefung aufnehmbaren Faltung des Bezuges angeordnet ist, daß das Haftverschlußelement als Mikro-Haftverschlußelement ausgebildet ist, und daß aufgrund der Faltung das Zusammenfahren der zu verhakenden Elemente nicht nur in Richtung des Flächenlotes erfolgt, sondern daß auch zumindest kleinräumige, zum Flächenlot quer verlaufende Bewegungskomponenten vorhanden sind, ist das Flauschelement mit der Außenseite der Faltung nicht unmittelbar verbunden, sondern über ein dazwischenliegendes Formelement, das aufgrund seiner Nachgiebigkeit zu einer Verbreiterung der Aufstandsfläche führt, in der die Kontaktierung zwischen Haftverschlußelement und Flauschelement stattfindet. Der Verhakungseingriff in verschiedenen Bewegungskomponenten wird zum einen durch die Nachgiebigkeit des Formelementes erreicht und zum anderen durch die angesprochene Faltung, so daß das Material des Formelementes unter der Druckbelastung beim Kontaktieren gewissermaßen arbeiten kann und auch nach Verbreiterung der Aufstandsfläche den sicheren Verhakungseingriff mit den Verhakungselementen des Mikro-Haftverschlußelementes bewirkt.

Mit der erfindungsgemäßen Vorrichtung besteht die Möglichkeit, anstelle üblicher Haftverschlußelemente, wie sie bislang ausschließlich bei Befestigungsvorrichtungen der hier betrachteten Art einsetzbar waren, ein "intelligentes" Verschlußsystem zur Anwendung zu bringen, nämlich ein sogenanntes Mikro-Haftverschlußelement zur Anwendung zu bringen, wie es aus der DE 196 46 318 A1 bekannt ist. Die Verwendung eines solchen Haftverschlußelementes war bislang deshalb nicht möglich, weil ein derartiges Kontaktieren des Haftverschlußelementes durch das an der Faltung des Bezuges befestigte Flauschelement, wie es beim Einstecken der Faltung des Bezuges in die nutartige Vertiefung des Schaumkörperteils zustande kommt, nicht zur Verhakung führt. Bei den erwähnten Mikro-Haftverschlußelementen mit in hoher Packungsdichte angeordneten Mikro-Verhakungselementen in Form von auf sehr kurzen Stengeln befindlichen, pilzartigen Köpfen, ist Voraussetzung für den Verhakungseingriff, daß das Zusammenfahren der zur verhakenden Elemente nicht nur in Richtung des Flächenlotes erfolgt, sondern daß auch zumindest kleinräumige, zum Flächenlot quer verlaufende Bewegungskomponenten vorhanden sind. Solche Bewegungskomponenten werden erfindungsgemäß durch die Nachgiebigkeit des Formelementes erreicht, indem das Material des Formelementes unter der Druckbelastung beim Kontaktieren gewissermaßen arbeitet und dadurch den sicheren Verhakungseingriff mit den Mikro-Verhakungselementen bewirkt.

Die Verwendung eines derartigen Verschlußsystems vermeidet die eingangs erwähnten, bei den bekannten Vorrichtungen auftretenden Probleme. Die Verhakung mit dem Mikro-Haftverschlußelement ergibt eine definierte Haltekraft, gegen die ein Ausheben der Verhakung bei Bedarf durchgeführt werden kann, ohne daß es zu einem Herausreißen oder Beschädigen der beteiligten Elemente kommt. So kann beispielsweise eine Repositionierung beim Montagevorgang zur Lagekorrektur ohne weiteres vorgenommen werden oder eine Auswechslung des gesamten Sitzbezuges.

Vorzugsweise hat das Formelement die Form eines zwischen dem Flauschelement und der Faltung des Bezuges befindlichen Schaumstoffpolsters.

Außer der sicheren Verhakung zwischen Flauschelement und Mikro-Haftverschlußelement erreicht man auch eine gewünschte großflächige Aufstandsfläche am Haftverschlußelement, wenn das Schaumstoffpolster an der Faltung des Bezuges eine Lage bildet, die sich von dem Stirnbereich der Faltung ausgehend zu beiden Seiten längs der den Seitenwänden der Vertiefung benachbarten Seitenflächen der Faltung erstreckt.

Das Schaumstoffpolster kann einen PUR-Schaumstoff oder ein Kautschukmaterial aufweisen. Das Schaumstoffpolster kann auf beliebige geeignete Weise mit der Faltung des Bezuges verbunden sein, beispielsweise durch Verkleben oder durch Flammkaschieren. In letzterem Fall kann das Flauschelelement auf das Schaumstoffpolster gleichzeitig aufkaschiert werden, wobei, wenn das Flauschelement an seiner Rückseite ein Haftverschlußelement aufweist, dieses beim Flammkaschieren mit seinen Verhakungselementen in das Schaumstoffpolster eingebettet werden kann.

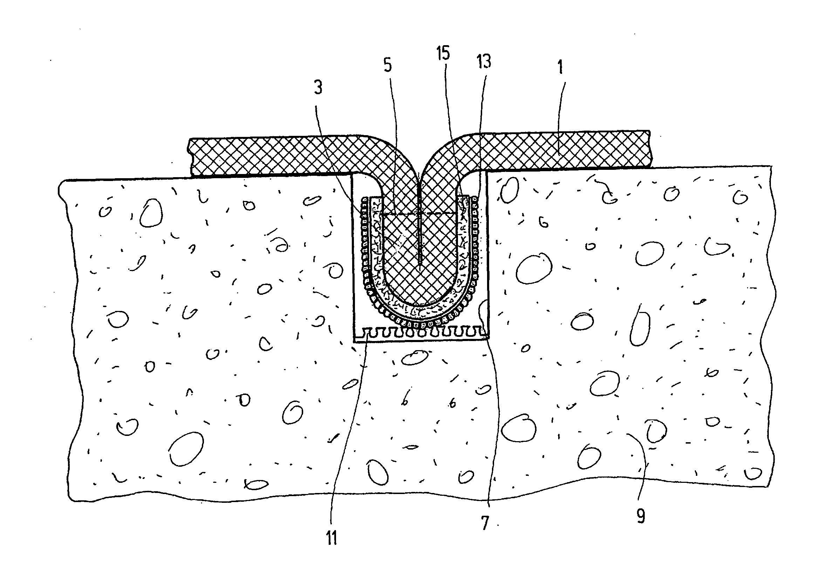

Nachstehend ist die Erfindung anhand der Zeichnung im einzelnen erläutert. Die einzige Figur zeigt einen vergrößerten, abgebrochen und stark schematisch vereinfacht gezeichneten Querschnitt der Verankerungsstelle der Faltung eines Sitzbezuges, wobei an der Verankerung beteiligte Verhakungselemente zur Verdeutlichung übertrieben groß dargestellt sind.

Die Figur zeigt einen Sitzbezug 1 im Bereich einer im wesentlichen U-förmigen Faltung 3, die durch Abnähen an einer bei 5 angedeuteten Nahtlinie gebildet ist. Die Faltung 3 dient der Verankerung des Bezuges 1 in einer nut- oder kanalartigen Verteifung 7 in einem als Polsterkörper dienenden Schaumkörperteil 9 aus Polyurethanschaum.

Die Vertiefung 7 kann bei der Herstellung des Schaumkörperteiles 9 durch Einschäumen in einer Einschäumform mit Hilfe von einer in die Einschäumform eingelegten Formpfeife ausgebildet werden. Gleichzeitig kann hierbei am Grund der Vertiefung 7 ein Haftverschlußelement 11 verankert werden, indem es durch Anschäumen unmittelbar mit dem Schaumkörperteil 9 verbunden wird. Bei dem Haftverschlußelement 11 handelt es sich, wie erwähnt, um einen Mikro-Haftverschluß mit Verhakungselementen aus thermoplastischem Werkstoff mit der Form von auf kurzen Stengeln sitzenden Pilzköpfen. Der Träger der Verhakungselemente kann auf seiner Rückseite ein geeignetes, das Eindringen von Schaummaterial beim Anschäumen begünstigendes Material aufweisen, beispielsweise ein Vlies. Alternativ könnte ein doppelseitiges Haftverschlußelement vorgesehen sein, das an seiner Rückseite ebenfalls Verhakungselemente aufweist, zwischen die das Schaumstoffmaterial beim Schäumvorgang zur Bildung des Schaumkörperteiles 9 eindringt.

Die Figur zeigt den Zustand, bei dem die Faltung 3 des Bezuges 1 in die Vertiefung 7 des Schaumkörperteils 9 teilweise eingeführt ist, kurz bevor es zur Verankerung kommt. Diese erfolgt durch Verhakung zwischen dem Haftverschlußelement 11 und einem Flauschelement 13, das die Faltung 3 des Bezuges 1 in einer durchgehenden Lage, die sich über im wesentlichen den gesamten, in der Vertiefung 7 aufnehmbaren Bereich der Faltung 3 erstreckt. Das Flauschelement 13 ist mit der Außenseite der Faltung 3 nicht unmittelbar verbunden, sondern über ein dazwischen liegendes Formelement, das durch ein Schaumstoffpolster 15 gebildet ist. Das Schaumstoffpolster 15, das eine die Breite der Faltung 3 merklich vergrößernde Dicke besitzt, kommt beim weiteren Hineindrücken der Faltung 3 in die Vertiefung 7, wenn also die Faltung 3 aus der in der Figur gezeigten Stellung tiefer in die Vertiefung 7 eingedrückt wird, in Mehrfachfunktion zur Wirkung. Zum einen kommt es durch die Nachgiebigkeit des Schaumstoffpolsters 15 zu einer Verbreiterung der Aufstandsfläche, in der die Kontaktierung zwischen Haftverschlußelement 11 und Flauschelement 13 stattfindet. Zum andern bewirkt die Nachgiebigkeit des Schaumstoffpolsters 15 eine Relativbeweglichkeit zwischen Flauschelement 13 und Verhakungselementen des Haftverschlußelementes 11 mit zur Einführrichtung geneigten Bewegungskomponenten, so daß es zur Verhakung am Mikro-Haftverschlußelement 11 kommt. Wie erwähnt, wird dadurch erreicht, daß eine sichere Verankerung mit Hilfe eines Mikro-Haftverschlußelementes 11 stattfindet, was bislang nur unter Verwendung von haken- und schlaufenförmigen Verankerungselementen der Fall war. Während bei diesen ein nachfolgendes Lösen der Verankerung nur durch Herausreißen der Verankerungselemente erfolgen kann, ergibt sich bei der erfindungsgemäßen Verwendung des Mikro-Haftverschlußelementes 11 eine definierte Haltekraft, gegen die ein Ausheben der Verhakungselemente möglich ist.

In der Figur ist der Sitzbezug 1 der Einfachheit halber lediglich einlagig dargestellt. Es versteht sich, daß mehrlagige Bezüge mit unterschiedlichen Obermaterialien verwendet werden können, etwa unterschiedliche Stoffbezüge oder Lederbezüge. Bei mehrlagigen Sitzbezügen können die Lagen durch Flammkaschieren miteinander verbunden sein, beispielsweise unter Zwischenlage von Zwischenpolster- oder Dämpferschichten in Form einer oder mehrerer Schaumstofflagen.

Das Schaumstoffpolster 15 kann auf verschiedene geeignete Weise mit der Faltung 3 verbunden werden, beispielsweise durch Nähen. Das Schaumstoffpolster 15 kann ein Kautschukmaterial enthalten oder ein PUR-Schaum sein. An der Außenseite des Schaumstoffpolsters 15 kann das Flauschelement 13 auf beliebige geeignete Weise befestigt sein, beispielsweise durch Kleben, Flammkaschieren oder Anschäumen. Das Flauschelement 13 kann aus unterschiedlichen, ein Verhaken mit dem Haftverschlußelement 11 ermöglichenden Materialien gebildet sein, beispielsweise durch einen Velourstoff. An der dem Schaumstoffpolster 15 zugekehrten Rückseite kann das Flauschelement 13 seinerseits ein Haftverschlußelement aufweisen, dessen Verhakungselemente in das Schaumstoffpolster 15 eingeschäumt sind oder mit diesem verhaken.

## Patentansprüche

1. Befestigungsanordnung Bezuges (1) an einem Schaumkörperteil (9), insbesondere einem Polsterschaumteil für einen Flug- oder Fahrgastsitz, mit einem am Grund einer nutartigen Vertiefung (7) des Schaumkörperteiles (9) befestigten Haftverschlußelement (11), bestehend aus einem Träger und darauf angeordneten Verhakungselementen, mit einem zur Verhakung mit diesem vorgesehenen Flauschelement (13), das mit Teilen des Bezuges (1) in der Vertiefung (7) anbringbar ist, und mit einem Formelement (15), das mit dem Flauschelement (13) zur Vergrößerung von dessen das Haftverschlußelement (11) berührender Aufstandsfläche zusammenwirkt, indem das Zusammenfahren der zu verhakenden Elemente in Richtung des Flächenlotes erfolgt, wobei das Formelement (15) ein bei Druckbelastung nachgiebiges, bei Entlastung zumindest näherungsweise zur Ausgangsform zurückkehrendes Material aufweist, **dadurch gekennzeichnet, daß** das Flauschelement (13) an einer in der Vertiefung (7) aufnehmbaren Faltung (3) des Bezuges (1) angeordnet ist, daß das Haftverschlußelement (11) als Mikro-Haftverschlußelement ausgebildet ist, und daß aufgrund der Faltung (3) das Zusammenfahren der zu verhakenden Elemente nicht nur in Richtung des Flächenlotes erfolgt, sondern daß auch zumindest kleinräumige, zum Flächenlot quer verlaufende Bewegungskomponenten vorhanden sind.

2. Befestigungsanordnung nach Anspruch 1, **dadurch gekennzeichnet, daß** das Formelement ein zwischen dem Flauschelement (13) und der Faltung (3) des Bezuges (1) angeordnetes Schaumstoffpolster (15) aufweist.

3. Befestigungsanordnung nach Anspruch 2, **dadurch gekennzeichnet, daß** das Schaumstoffpolster (15) an der Faltung (3) des Bezuges (1) eine Lage bildet, die sich von dem dem Haftverschlußelement (11) in der Vertiefung (7) des Schaumkörperteiles (9) zugekehrten Stirnbereich der Faltung (3) ausgehend zu beiden Seiten längs der den Seitenwänden der Vertiefung (7) benachbarten Seitenflächen der Faltung (3) erstreckt.

4. Befestigungsanordnung nach Anspruch 2 oder 3, **dadurch gekennzeichnet, daß** das Schaumstoffpolster (15) einen PUR-Schaumstoff oder ein Kautschukmaterial aufweist.

5. Befestigungsanordnung nach einem der Ansprüche 2 bis 4, **dadurch gekennzeichnet, daß** das Schaumstoffpolster (15) durch Kaschieren, vorzugsweise Flammkaschieren, mit der Faltung (3) verbunden ist.

6. Befestigungsanordnung nach Anspruch 5, **dadurch gekennzeichnet, daß** das Flauschelement (13) eine die Außenseite des Schaumstoffpolsters (15) im wesentlichen vollständig umgebende, durch Kaschieren mit dieser verbundene Lage bildet.

7. Befestigungsanordnung nach Anspruch 6, **dadurch gekennzeichnet, daß** zumindest ein Teil der dem Schaumstoffpolster (15) zugewandten Rückseite des Flauschelementes (13) ein Haftverschlußelement mit für die Verhakung mit dem Schaumstoffpolster (15) vorgesehenen Verhakungselementen aufweist.

8. Befestigungsanordnung nach einem der Ansprüche 1 bis 7, **dadurch gekennzeichnet, daß** zumindest das am Grund der nutartigen Vertiefung (7) des Schaumkörperteiles befestigte Haftverschlußelement ein Mikro-Haftverschluß (11) ist.

9. Befestigungsanordnung nach Anspruch 8, **dadurch gekennzeichnet, daß** ein Mikro-Haftverschlußelement (11) mit 200 bis 400 Verhakungselementen pro cm² und einem Träger mit einer Dicke von 0,1 bis 0,3mm vorgesehen ist.

10. Befestigungsanordnung nach Anspruch 9, **dadurch gekennzeichnet, daß** als Flauschelement (13) ein für die Verhakung mit dem Mikro-Haftverschlußelement (11) geeignetes textiles Material mit kleinen oberflächlichen Schlaufen, ein Velourstoff, Filz oder dergleichen vorgesehen ist.

## Claims

1. Fixing arrangement for fixing a cover (1) to a foamed body (9), especially an upholstery foamed body component for an aircraft or vehicle passenger seat, with an adhesive closing element (11), fixed to a groove-like cavity (7) in the foamed plastic body component (9), comprising a carrier and interlocking elements on it, with a fleece element for interlocking with it, which can be arranged together with parts of the cover in the cavity (7), and with a shaped element (15) which coacts with the fleece element (13) to enlarge the contact surface thereof which touches the adhesive closing element (11), the elements which are to be locked together moving in the perpendicular direction to the fleece surface, whereby the shaped element (15) is of a material that is flexible under pressure and at least approximately returns to its original shape when relaxed, **characterised in that** the fleece element (13) is arranged at a fold (3) of the cover (1) which can be accommodated in the cavity (7), that the adhesive closing element (11) is in the form of a micro adhesive closing element and that, due to the fold (3), the elements which are to interlock not only move in the perpendicular direction to the surface of the fleece but that movement components over a small space across the perpendicular direction to the surface of the fleece are also present.

2. Fixing arrangement according to Claim 1, **characterised in that** the shaped element has a foamed plastic pad (15) arrangement between the fleece element (13) and the fold (3) of the cover (1).

3. Fixing arrangement according to Claim 2, **characterised in that** the foamed plastic (15) forms a layer at the fold (3) of the cover (1) which extends from the face area of the fold (3) in the adhesive closing element (11) in the cavity (7) of the foamed plastic body component to the two sides along the side faces of the fold (3) adjoining the side walls of the cavity (7).

4. Fixing arrangement according to Claim 2 or 3, **characterised in that** the foamed plastic pad (15) is of a PUR foamed plastic or rubber material.

5. Fixing arrangement according to one of the Claims 2 to 4, **characterised in that** the foamed plastic pad (15) is connected with the fold (3) by coating, preferably flame coating.

6. Fixing arrangement according to Claim 5, **characterised in that** the fleece element (13) forms a layer in the main fully surrounding the outside of the foamed plastic pad (15) and connected with it by laminating.

7. Fixing arrangement according to Claim 6, **characterised in that** at least part of the back side of the fleece element (13) facing the foamed plastic pad (15) has an adhesive closing element with interlocking elements intended for locking with the foamed plastic pad (15).

8. Fixing arrangement according to one of the Claims 1 to 7, **characterised in that** the adhesive closing element attached at the bottom of the groove-like cavity (7) is a micro closing element (11).

9. Fixing arrangement according to Claim 8, **characterised in that** a micro adhesive closing element (11) has 200 to 400 locking elements per sq.cm and a carrier with a thickness between 0.1 and 0.3 mm.

10. Fixing arrangement according to Claim 9, **characterised in that** a suitable textile material with small loops on the surface, a velour material, felt or the like is provided for interlocking with the micro adhesive closing element (11).

## Revendications

1. Dispositif pour fixer un revêtement (1) sur une partie de corps en mousse (9), notamment une partie en mousse de rembourrage pour un siège de passager d'un moyen de transport, comprenant un élément de fermeture par adhérence (11) fixé sur la base d'une cavité (7) en forme de rainure de la partie de corps en mousse (9), consistant en un support et en un élément d'accrochage disposé sur celui-ci, comprenant un élément en frise (13), prévu pour l'accrochage avec celui-ci, qui peut être aménagé avec les parties du revêtement (1) dans la cavité (7), et comprenant un élément de modelage (15), qui coopère avec l'élément en frise (13) pour agrandir la surface de contact au sol touchant l'élément de fermeture par adhérence (11), en ce que la collision des éléments à accrocher se fait dans la direction de la verticale de la surface, moyennant quoi l'élément de modelage (15) présente un matériau déformable lors de la charge de pression, revenant au moins approximativement à sa forme initiale lors de la décharge, **caractérisé en ce que** l'élément en frise (13) est disposé sur un pliage (3) du revêtement (1) pouvant être logé dans la cavité (7), **en ce que** l'élément de fermeture par adhérence (11) est conçu comme un microélément de fermeture par adhérence, et **en ce que**, en raison du pliage (3), non seulement la collision des éléments à accrocher se fait dans la direction de la verticale de la surface, mais encore **en ce que** sont disponibles également au moins de faibles composantes de mouvement, s'étendant transversalement par rapport à la verticale de la surface.

2. Dispositif de fixation selon la revendication 1, **caractérisé en ce que** l'élément de modelage présente un rembourrage en mousse (15) disposé entre l'élément en frise (13) et le pliage (3) du revêtement (1).

3. Dispositif de fixation selon la revendication 2, **caractérisé en ce que** le rembourrage en mousse (15) forme sur le pliage (3) du revêtement (1) une position, qui s'étend depuis la zone frontale du pliage (3), adjacente à l'élément de fermeture par adhérence (11) dans la cavité (7) de la partie de corps en mousse (9), en partant des deux côtés le long des surfaces latérales du pliage (3) voisines des parois latérales de la cavité (7).

4. Dispositif de fixation selon la revendication 2 ou 3, **caractérisé en ce que** le rembourrage en mousse (15) comprend une mousse de polyuréthane ou un matériau en caoutchouc.

5. Dispositif de fixation selon l'une quelconque des revendications 2 à 4, **caractérisé en ce que** le rembourrage en mousse (15) est relié au pliage (3) par contrecollage, de préférence par contrecollage par flamme.

6. Dispositif de fixation selon la revendication 5, **caractérisé en ce que** l'élément en frise (13) forme une position reliée à celui-ci par contrecollage, entourant sensiblement complètement le côté extérieur du rembourrage en mousse (15).

7. Dispositif de fixation selon la revendication 6, **caractérisé en ce qu'**au moins une partie du côté arrière de l'élément en frise (13), tourné vers le rembourrage en mousse (15), présente un élément de fermeture par adhérence avec les éléments d'accrochage prévus pour l'accrochage avec le rembourrage en mousse (15).

8. Dispositif de fixation selon l'une quelconque des revendications 1 à 7, **caractérisé en ce qu'**au moins l'élément de fermeture par adhérence, fixé sur la base de la cavité (7) en forme de rainure de la partie de corps en mousse, est un microélément de fermeture par adhérence (11).

9. Dispositif de fixation selon la revendication 8, **caractérisé en ce qu'**un microélément de fermeture par adhérence (11) est prévu avec 200 à 400 éléments d'accrochage par cm² et avec un support présentant une épaisseur comprise entre 0,1 et 0,3 mm.

10. Dispositif de fixation selon la revendication 9, **caractérisé en ce qu'**un matériau textile approprié, comprenant de petits passants superficiels, un tissu en velours, du feutre ou similaire est prévu comme élément en frise (13) pour l'accrochage avec le microélément de fermeture par adhérence (11).
